(19) **Europäisches Patentamt**

**European Patent Office**

**Office européen des brevets**

(11) **EP 0 998 818 B1**

(12) **EUROPEAN PATENT SPECIFICATION**

(45) Date of publication and mention
of the grant of the patent:
**07.05.2003  Bulletin 2003/19**

(21) Application number: **98933984.1**

(22) Date of filing: **09.07.1998**

(51) Int Cl.7: **H04N 5/655**

(86) International application number:
**PCT/NO98/00208**

(87) International publication number:
**WO 99/005862 (04.02.1999 Gazette 1999/05)**

(54) **A METHOD IN COMPRESSION CODING**

KOMPRESSIONSKODIERUNGSVERFAHREN

PROCEDE DE CODAGE DE COMPRESSION

(84) Designated Contracting States:
**DE FR GB**

(30) Priority: **28.07.1997  NO 973462**

(43) Date of publication of application:
**10.05.2000  Bulletin 2000/19**

(73) Proprietor: **Fast Search & Transfer ASA**
**0124 Oslo (NO)**

(72) Inventor: **FULDSETH, Arild**
**N-0368 Oslo (NO)**

(74) Representative: **Heselberger, Johannes et al**
**Bardehle, Pagenberg, Dost,**
**Altenburg, Geissler, Isenbruck,**
**Galileiplatz 1**
**81679 München (DE)**

(56) References cited:
**EP-A2- 0 593 013          US-A- 5 150 209**
**US-A- 5 495 292**

• **SEOP HYEONG PARK, SANG UK LEE, "A Pyramid Image Coder Using Classified Transform Vektor Quantization Signal Processing 22", 1991, ELSEVIER, pages 25-42.**
• **IEEE TRANSACTIONS ON CIRCUIT AND SYSTEMS FOR VIDEO TECHNOLOGY, Volume 1, No. 1, March 1991, K. METIN UZ et al., "Interpolative Multiresolution Coding of Advanced Television with Compatible Subchannels".**
• **PROCEEDINGS OF THE IEEE, Volume 83, No. 2, February 1995, WEIPING LI, YA-QIN ZHANG, "Vector-Based Signal Processing and Quantization for Image and Video Compression", pages 317-334.**

**Description**

The present invention concerns a digitalized image information compression method to compress bit representation of parameters for side information in the form of a classification table or motion vectors, wherein the parameter to be coded is represented by a vector with integer components. More particularly the invention concerns a method based on hierarchical enumeration in order to represent parameters in algorithms for compression coding of image and video information.

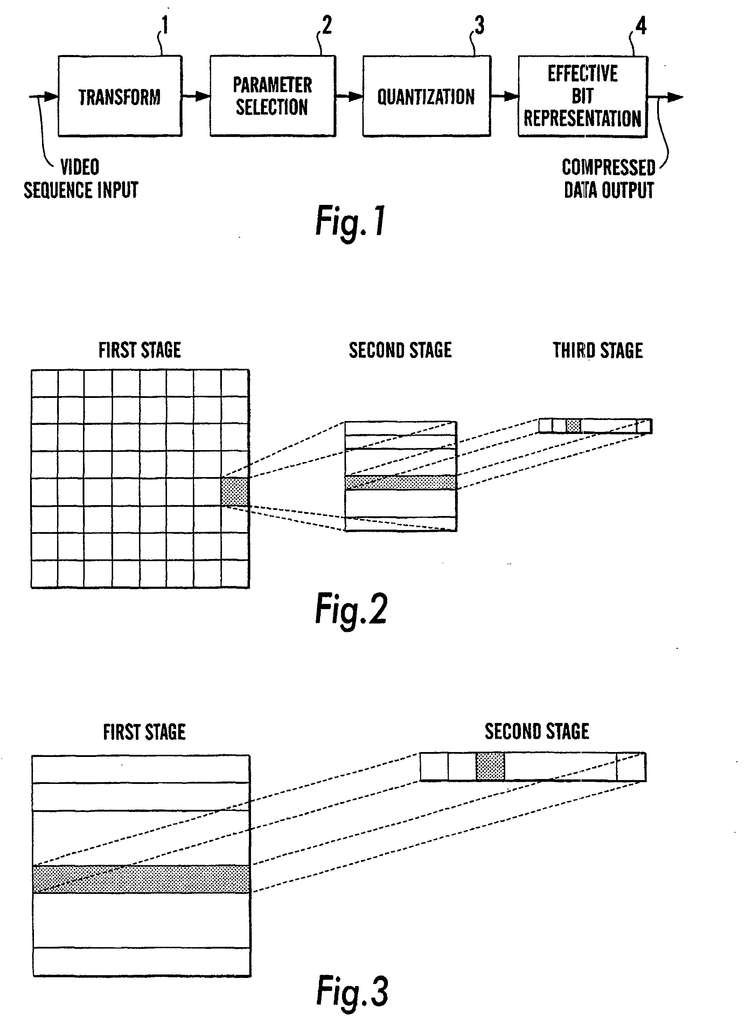

A system or algorithm for video data compression is shown schematically in fig. 1. A system of this kind which may be implemented on computers or on a dedicated processing device, comprises four stages.

The video signals or generally image signals are input to a first stage 1, called transform, which transforms the video signals (or a video sequence) into a set of parameters suited for compression. The ouput from stage 1 is transferred to stage 2, called parameter selection, which reduces the total number of parameters. Only the most important parameters are selected in stage 2 for further processing and output to stage 3, called quantization, which converts the input parameters from real numbers with infinitely many values into integers with finitely many values. In stage 4, called effective bit representation, the input parameters are represented with a least possible number of bits. Two methods for doing this are known, namely variable length coding (VLC) and fixed length coding (FLC). A main problem with variable length coding is synchronization due to transmission errors in mobile transmission channels. Fixed length coding avoids this problem, but is generally much less effective than variable length coding.

The present invention discloses a novel method for stage 4 of the compression coding, i.e. the effective bit representation of some of the integer parameters in an algorithm for image or video compression. These parameters are the so-called side information parameters, of which the most important are

1. Motion vectors

These parameters are found in most algorithms for video data compressions including the standards MPEG-1 and MPEG-2.

2. Classification table (Bit allocation tablet

The use of these parameters is uncommon in video data compression, but is known in the art.

Generally it can be regarded as known using Huffman coding, arithmetic coding or differential coding for representing the side information parameters.

As instances of prior art concerning bit representation using variable length coding reference may be made to US patent No. 5 428 396 (Yagasaki & al.) and US patent No. 5 487 119 (Kimura & al.).

Yagasaki & al. discloses a method of assigning a variable length code value to a motion vector, based on providing a reference table for associating with a respective variable length code value each possible value of motion vectors and comprising forming an output bit stream which includes variable length code values. Kimura & al. discloses an image coding method by which accurate code amount control can be performed without the necessity of recursive processing. The method is applied to an image coding apparatus which i.a. comprises a code allocation section for allocating the quantization index from a quantization section as a code word generated by variable length coding.

All the prior art methods are suffering from a number of deficiencies and problems. Traditional fixed length coding is, in so far it is used, ineffective, while methods based on variable length coding as mentioned are sensitive to transmission errors in noisy channels. As already stated, this is due to the parameters being represented with binary code words of variable length. Additionally, prior art methods are sensitive to variations in the image and video sources. The prior art methods are usually based on statistical parameters for the image or video source material and these parameters may vary.

Hence the main object of the present invention is to obviate the above-mentioned deficiencies and disadvantages of the prior art. More particularly the object of the present invention is to avoid synchronization problems in a receiver due to transmission errors and further to provide an efficient method for coding side information independently of particular properties of the side information such as statistical fluctuations.

It is a specific object of the present invention to provide a more effective representation of the side information parameters compared with the methods according to the prior art.

The above objects and advantages are achieved according to the invention, which is defined in its broadest aspect in claim 1, with a method which is characterized by enumerating the vector hierarchically in two or more levels by partitioning the vector in subvectors and/or vector elements on each level, generating binary code words for each subvector and/or each vector element on a given level, said binary code word for a subvector and/or a vector element on one level being formed by the binary code words for the subvectors and/or the vector elements on a lower level, and generating a binary code word with fixed length for the vector from the binary code words for the subvector or the vector elements of the immediately underlying level of the hierarchy.

Where the parameter is classification table, it is according to the invention preferred using unsigned hierarchical enumeration.

Where the parameters are motion vectors, it is according to the invention preferred using a combination of signed and unsigned hierarchical enumeration.

If the parameter is a classification table, it is according to the invention preferred using three levels for the hierarchical enumeration, and if the parameters are motion vectors, it is according to the invention preferred using two levels for the hierarchical enumeration.

The invention shall now be explained in more detail by means of exemplary embodiments and with reference to the accompanying drawing, wherein

fig. 1 shows a diagram of a system for video compression, as known in the art and discussed in the introduction of the application,

fig. 2 schematically hierarchical partitioning for coding of a classification table, and

fig. 3 schematically hierarchical partitioning for coding of motion vectors.

The method according to the present invention is based on the fact that the parameters for the side information to be represented only can be present in a finite number of combinations. Each separate combination can be represented by a unique binary codeword. As the number of combinations is large, the binary codeword must be computed by means of a mathematical algorithm, a so-called enumeration algorithm. In order to simplify the mathematical computation the enumeration takes place in several levels, so-called hierarchical enumeration, wherein a limited number of parameters is processed as a unit.

First, the coding of the side information shall be briefly discussed. In this connection a general reference to the inventor's doctoral dissertation is appropriate, viz. "Robust Subband Video Compression for Noisy Channels with Multilevel Signaling" by Arild Fuldseth, Dissertation 1997:87, Department of Telecommunications, Norwegian University of Science and Technology, Trondheim, Norway (Report 429708, ISBN 82-471-0123-8). Particularly reference is made to Sections 5.4, pp.120-123 thereof concerning a blockwise classification of subband samples by dividing each subband in blocks of B x B adjacent samples, the blocks being classified in J classes; and Section 5.6, pp. 126-130 thereof concerning a motion compensated prediction used in two basic video coder structures (ibid., pp. 115-118). Both structures use a block-based motion compensation to improve the efficiency of an interframe differential pulse code modulation (DPCM) scheme.

The side information consists of the following parameters:

• Classification table
• Motion vectors
• Class standard deviations.

Of these standard parameters, only the classification table and the motion vectors contribute significantly to the overall bit rate.

A straightforward way to the code classification table is by using a fixed-length code with $[\log_2(J)]$ bits per block. With B = 4, and J = 8, this corresponds to 0.1875 bits per pixel. Alternatively, a variable-length code(e.g. Huffman code or arithmetic code) optimized for the 0'th order entropy of the classification table can be used to code each integer number individually. This would improve the performance compared to the fixed-length code, but would still be quite inefficient for the higher frequency subbands where the classification table can be expected to contain a large number of zeros. This approach can be further improved by designing a variable-length code based on the conditional entropy between neighbour entries in the classification table. Alternatively, one might use run-length coding similar to the method used for coding of the discrete cosine transform (DCT) coefficients (see ITU-T(CCITT) Draft Recommendation H. 263, "Video Coding for Low Bitrate Communication", May 1996). The motion vectors can be coded by using variable-length coding of each motion vector component individually, or in terms of differences between motion vector components of adjacent motion blocks (ibid.).

The present invention proposes a new strategy for fixed-length lossless coding of the classification table and the motion vectors. The method is derived from the enumeration techniques used for pyramid vector quantization (PVQ) to enumerate lattice points on a pyramid surface, (see T.R. Fischer, "A pyramide vector quantizer", IEEE Trans. Inform. Theory, IT-32:568-583, July 1986) and can be used to encode any vector of integers. Thus, it is suitable for encoding of the classification table and the motion vectors. Note that although fractional motion vectors might be used, they can be converted to integer vectors by proper scaling. The proposed method shall be referred to as hierarchical enumeration. In addition to being efficient in terms of the required number of bits, hierarchical enumeration is suitable for noisy channels due to the use of fixed-length codewords.

A general description of hierarchical enumeration is given below, followed by a discussion of the coding of the classification table and the motion vectors according to the present invention by using the method of the hierarchical enumeration.

In the following, the basic hierarchical enumeration technique for coding of vectors with integer valued components will be described. It is distinguished between unsigned enumeration, where all vector elements are non-negative, and signed enumeration, where the vector elements can be both positive and negative. For coding of the classification table, only unsigned enumeration will be used. For coding of the motion vectors, however, a combination of signed and unsigned enumeration will be used.

Let the integer vector to be coded for transmission be given as

$$n = [n_0, n_1, ..., n_{\mathrm{Lp}-1}], \ n_i \in Z. \tag{1}$$

Assume that the sum

$$K_P = \sum_{i=0}^{L_P-1} |n_i| \tag{2}$$

is known at the decoder side. In some cases, $K_P$ is a constant which can be stored permanently at the decoder side. In other cases, $K_P$ can be transmitted to the decoder in advance using $[\log_2(K_{max})]$ bits, where the maximum value of $K_P$, $K_{max}$, is known at the decoder side. For coding of the classification table, $K_{max}$ can be derived from the total bit rate since there is a one-to-one relationship between an entry in the table and the number of bits used to quantize the subband samples in the corresponding block.

Let $N_s(L_P, K_P)$ be the number of $L_P$-dimensional integer vectors $n$ satisfying Equation 2 for signed enumeration, and let $N_u(L_P, K_P)$ be the corresponding number of vectors for unsigned enumeration. Thus, the number of bits needed to specify a given vector $b$ is given by

$$b_s = \lceil \log_2(N_s(L_P, K_P)) \rceil \tag{3}$$

and

$$b_u = \lceil \log_2(N_u(L_P, K_P)) \rceil \tag{4}$$

for signed and unsigned enumeration, respectively.

For signed enumeration, it is shown (P.F. Swaszek, "A vector quantizer for the Laplace source", IEEE Trans. Inform. Theory IT 37 (5) 1353-1365, September 1991) that the number of vectors satisfying Equation 2 is given by

$$N_s(L_P, K_P) \sum_{p=1}^{m} \binom{L_P}{p}\binom{K_P - 1}{p - 1} 2^p, \tag{5}$$

where m = min[$L_P$, $K_P$]. For unsigned enumeration, the number of vectors satisfying Equation 2 is given as (R.P. Grimaldi, "Discrete and Combinational Mathematics", Addison-Wesley Publ. Co., New York, N.Y. USA, 1989)

$$N_u(L_P, K_P) = \binom{L_P + K_P - 1}{K_P} \tag{6}$$

Furthermore, $N_s(L_P, K_P)$ can be calculated recursively as (T.R. Fischer, Op. cit.)

$$N_s(L_P, K_P) = N_s(L_P\text{-}1, K_P) + N_s(L_P, K_P\text{-}1)$$

$$+ N_s(L_P\text{-}1, K_P\text{-}1),\ K_P,\ L_P \geq 1 \tag{7}$$

with the initial conditions $N_s(L_P, 0) = 1$, $L_P \geq 0$ and $N_s(0, K_P) = 0$, $K_P \geq 1$.

Similarly, for unsigned integers, it is straightforward to show that the following recursive relationship holds

$$N_u(L_P, K_P) = N_u(L_P\text{ -}1, K_P) + N_u(L_P, K_P\text{ -}1),\ K_P,\ L_P \geq 1 \tag{8}$$

with the same initial conditions as above.

Furthermore, an encoding algorithm which assigns a unique integer to each possible vector *n* is needed. For transmission over a binary channel, the resulting integer is converted to a binary codeword having $b_s$ or $b_u$ bits for signed and unsigned enumeration, respectively. Since $N_s(L_P, K_P)$ is identical to $N(L_P, K_P)$ which is the number of lattice points on the surface of an $L_P$- dimensional pyramid with radius *r* (Fuldseth, Op.cit., Section 5, p. 124), signed enumeration can be performed using the PVQ enumeration algorithm in (T.R. Fischer, Op.cit.). For unsigned enumeration, an algorithm derived from the signed algorithm is given in the Appendix appended at the end of the present application.

This method of coding the classification table is very efficient for coding of vectors with many zeros which are characteristic for the classification table in low bit rate video coding. To realize this, consider as a simple example the case where $L_P = 20$ and $K_P = 5$. By substitution into Equation 4 and Equation 6, one obtains $N_u(20,5) = 42504$ and $b_u = 16$ corresponding to 0.8 bits per vector element. Assuming that each vector element corresponds to a block of 4 x 4 pixels, the vector is coded with only 0.8/16 = 0.05 bits per pixel.

Unfortunately, the complexity of the enumeration algorithm grows rapidly as the values of $L_P$ and $K_P$ are increased. In practical implementations, typical values are limited to 10 - 100 and 100 - 1000 for $L_P$ and $K_P$ respectively. Assuming a frame size of 352 x 288 (Common Interchange Format (CIF)) and $B = 4$, one gets $L_P = 6336$ while $K_P$ might be in the order of 10000 - 100000 depending on the bit rate. Thus, coding of the entire classification table as a single vector is prohibitive for complexity reasons and simplifications need to be used. This is achieved by hierarchical enumeration which is performed by dividing the vector ***n*** into *p* sub-vectors ***n***$_i$ of length $l = L_P/p$ according to

$$n_i = [n_{il},\ n_{il+1},\ ...,\ n_{il+l\text{-}1}]^{\mathrm{T}},\ i \in \{0,\ ...,\ p - 1\}, \tag{9}$$

where the sum of each sub-vector is given as

$$k_i = \sum_{j=0}^{l-1} |n_{il+j}|. \tag{10}$$

In the first stage of the hierarchical procedure, the vector $[k_0, k_1, ..., k_{p\text{-}1}]$ is coded using $\lceil \log_2(N_u(p, K_P)) \rceil$ bits. In the second stage, each of the vectors ***n***$_i$, $i \in \{0, ..., p - 1\}$ are coded using $\lceil \log_2(N_s(l, k_i)) \rceil$ bits for signed enumeration, and $\lceil \log_2(N_u(l, k_i)) \rceil$ bits for unsigned enumeration. The hierarchical enumeration technique can be extended to include as many stages as desired to achieve a given complexity. Note, however, that the coding efficiency decreases as the number of stages increases.

The classification table consists of an integer number $n \in \{0, 1, ..., J - 1\}$ for each block of size *B* x *B* in a subband frame. The number *n,* associated with a given block indicates to which class this particular block belongs.

The classification table is coded by use of hierarchical enumeration in three stages as illustrated in figure 2. In the first stage, each subband corresponds to one vector element, while in the second stage each row of blocks in one subband corresponds to one vector element. Finally in the third stage, one row of blocks is coded as one vector. The hierarchical enumeration for the classification table can be described mathematically as follows.

Assume a video frame with $N_r$ rows and $N_c$ columns, $K_f$ x $K_f$ subbands, and a classification block size of *B* x *B.* Let $n_{i,j,k}$ be the class of the *k*'th block of the *j*'th row of blocks in subband number *i*. Furthermore, define

$$K_{3,i,j} = \sum_{k=0}^{N_{BK}-1} n_{i,j,k}, \quad j \in \{0,1,\dots,N_{BJ}-1\}, i \in \{0,1,\dots,N_{BJ}-1\}, \tag{11}$$

$$K_{2,i} = \sum_{j=0}^{N_{BJ}-1} K_{3,i,j}, \quad i \in \{0,1,\dots,N_{BI}-1\}, \tag{12}$$

and

$$K_1 = \sum_{i=0}^{N_{BJ}-1} K_{2,i}. \tag{13}$$

where

$$N_{BK} = N_c /(K_f B), \ N_{BJ} = N_r /(K_f B), \text{ and } N_{BI} = K_f^2.$$

Now, the classification table can be coded hierarchically as follows:

*Initial coding:* Code $K_1$ with $b_0 = [\log_2(K_{1,max})]$ bits. $K_{1,max}$ can be determined from the total bit rate. The natural binary code (NBC) is used to generate the corresponding codeword.

*First stage*: Code the vector

$$\left[ K_{2,0}, K_{2,1}, \dots, K_{2,N_{BI}} - 1 \right] \text{ with } b_1 = \left\lceil \log_2 \left( N_u \left( N_{BI}, K_1 \right) \right) \right\rceil \text{ bits.}$$

*Second stage:* For each value of $i \in \{0,1,\dots,N_{BI} - 1\}$, code the vector

$$\left[ K_{3,i,0}, K_{3,i,1}, \dots K_{3i,N_{BJ}-1} \right] \text{ with } b_{2,i} = \left\lceil \log_2 \left( N_u \left( N_{BJ}, K_{2,i} \right) \right) \right\rceil \text{bits.}$$

*Third stage*: For each value of $i \in \{0,1,\dots,N_{BI} - 1\}$, and $j \in \{0,1,\dots,N_{BJ} - 1\}$, code the vector

$$\left[ n_{i,j,0}, n_{i,j,1}, \dots n_{i,j,N_{BK}-1} \right] \text{ with } b_{3,i,j} = \left\lceil \log_2 \left( N_u \left( N_{BK}, K_{3,i,j} \right) \right) \right\rceil \text{ bits.}$$

For stages 1-3, unsigned enumeration as described above is the default coding method. However, in order to reduce the computational and memory requirements, the NBC is used for each vector element if the length $L_P$ and the sum $K_P$ of the vector to be coded satisfy

- $K_P > 1000$ or

- $L_P > 16$ and $K_P > 500$ or

- $L_P > 32$ and $K_P > 250$ or

- $L_P > 64$.

The values of $L_P$ at a given stage will depend on the frame size, the number of subbands, and the classification block size. The values of $K_P$ will depend on the statistics of the input signal and the given bit rate.

The motion vectors are coded considering the vertical and the horizontal vector components independently. Thus, the information to be coded consists of two integer vectors, one containing all the vertical motion vector components, and one containing all the horizontal motion vector components.

The motion vectors are coded using hierarchical enumeration in two stages as illustrated in figure 3. In the first stage, each row of motion blocks corresponds to one vector element, while in the second stage, each row of motion blocks is coded as one vector. Note that since the motion vector components can be negative, signed enumeration needs to be used for the second stage of the hierarchical enumeration.

The hierarchical enumeration for the motion vectors can be described mathematically as follows.

Assume a video frame with $N_r$ rows, $N_c$ columns, a motion block size of $M \times M$, and a motion vector search range $< -W, W >$. Let

$$m_{i,j} = rv_{i,j}, \tag{14}$$

where $v_{i,j}$ is the vertical or the horizontal motion vector component of the $j$'th motion block in the $i$'th row of motion blocks, and $r$ is the spatial motion estimation resolution (i.e. $r = 1$ for integer pixel resolution, $r = 2$ for half pixel resolution, etc.) Thus, $m_{i,j}$ are integers in the interval $<-Wr, Wr>$. Next define

$$K_{2,i} = \sum_{j=0}^{N_{MJ}-1} |m_{i,j}|, i \in \{0,1,\ldots,N_{MJ}-1\}, \tag{15}$$

and

$$K_1 = \sum_{i=0}^{N_{MI}-1} K_{2,i}, \tag{16}$$

where $N_{MJ} = N_c/M$ and $N_{MI} = N_r/M$. Now, the motion vectors can be coded hierarchically as follows:

*Initial coding:* Code $K_1$ with $b_1 = \lceil \log_2(2(rW - 1)N_rN_c/M^2) \rceil$ bits. The NBC is used to generate the corresponding binary codeword

*First stage:* Code the vector

$$\left[K_{2,0}, K_{2,1}, \ldots, K_{2N_I-1}\right] \text{ with } b_2 = \left\lceil \log_2\left(N_u\left(N_{MJ}, K_1\right)\right)\right\rceil \text{ bits.}$$

*Second stage:* For each value of $i \in \{0, 1,\ldots, N_{MI} - 1\}$, code the vector

$$\left[m_{i,0}, m_{i,1}, \ldots m_{i,N_{MJ}-1}\right] \text{ with } b_{2,i} = \left\lceil \log_2\left(N_s\left(N_{MJ}, K_{2,i}\right)\right)\right\rceil \text{ bits.}$$

The default coding method is to use unsigned enumeration for the first stage, and signed enumeration for the second stage as described above. However, in order to reduce the computational and memory requirements, the NBC is used for each vector element if the length $L_P$ and the sum $K_P$ of the vector to be coded satisfy

- $K_P > 1000$ or

- $L_P > 16$ and $K_P > 500$ or

- $L_P > 32$ and $K_P > 250$ or

- $L_P > 64$.

The values of $L_P$ at a given stage will depend on the frame size, while the values of $K_P$ will depend on the statistics of the input signal.

Persons skilled in the art will easily realize that the method according to the invention may be implemented in somewhat different variants without departing from the scope of the invention as given by the appended claims. For instance, if the parameter values each are constrained, this may be used to simplify the hierarchical enumeration. Instead of coding each parameter value directly, it may be used a differential coding, e.g. by taking in regard neighbour values in the classification table, neighbour vectors etc. A differential coding may, of course, be combined with a direct coding. Finally, it should be noted that hierarchical enumeration as disclosed herein may also be used in a video compression system or algorithm different from the one shown in fig. 1 and with different parameters, for instance of a fractal kind.

### Appendix: - Unsigned enumeration

In this appendix, the unsigned enumeration algorithm used for hierarchical enumeration is described in detail. The unsigned algorithm is derived directly from the signed enumeration algorithm given in T.R. Fischer, "A Pyramid Vector Quantizer", IEEE Trans. Inform. Theory, IT-32:568-583, July 1986.

Let the $L_P$-dimensional unsigned integer vector to be coded be given as

$$y = \left[y_0, y_1, \ldots y_{L_P-1}\right]^T, \quad y_i \in \{0,1,\ldots\}. \tag{A.1}$$

and let

$$K_P = \sum_{i=0}^{L_P-1} y_i. \tag{A.2}$$

The encoding and decoding algorithms are given below.

Encoding

The purpose of the encoding algorithm is to determine a unique integer number $b \in \{0,1,\ldots, N_u(L_P,K_P)-1\}$ associated with the vector $y$, where $N_u(L_P,K_P)$ is the number of $L_P$-dimensional unsigned vectors satisfying Equation A.2. The value of $N(L_P,K_P)$ is given by Equation 6 of the description.

Set $b = 0$, $i = 0$, $k = K_P$, $l = L_P$.

    1. If $y_i > 0$ then

$$b = b + \sum_{j=0}^{y_i - 1} N_u(l - 1, k - j).$$

2. $k = k - y_i$, $l = l - 1$, $i = i + 1$.
3. If ($k = 0$), then stop, otherwise, go to 1.

Decoding

The purpose of the decoding algorithm is to determine a unique vectory, associated with the number $b \in \{0,1,...,N_u(L_P, K_P) - 1\}$.
Set $y = 0$, $i = 0$, $yb = 0$, $K_P$, $l = L_P$.

1. If ($b = yb$), then $y_i = 0$; go to 5.
2. If ($b < yb + N_u(l - 1, k)$), then $y_i = 0$; go to 4
Otherwise, $yb = yb + N_u(l - l,k)$; set $j = 1$.
3. If ($b < yb + N_u(l - 1, k - j)$), then $y_i = j$.
Otherwise, $yb = yb + Nu(l - 1, k - j)$; set $j = j + 1$, go to 3.
4. $k = k - y_i$, $l = l - 1$, $i = i + 1$. If ($k > 0$), go to 1.
5. If ($k > 0$), then $y_{Lp-1} = k - y_i$.

**Claims**

1. A digitalized image information compression method to compress bit representation of parameters for side information in the form of classification tables or motion vectors, **characterized by**:

   - representing the parameter to be coded by a vector with integer components,
   - enumerating the vector hierarchically in two or more levels by partitioning the vector in subvectors and/or vector elements on each level,
   - generating binary code words for each subvector and/or each vector element on a given level,
   - said binary code word for a subvector on one level being formed by the binary code words for the subvectors and/or the vector elements on a lower level,
   - said binary code word for a vector element on one level being formed by the binary code word for the vector elements on a lower level, and
   - generating a binary code word with fixed length for the vector from the binary code words for the subvectors or the vector elements of the immediately underlying level of the hierarchy.

2. A method according to claim 1, wherein one of the parameters is a classification table, **characterized by** using unsigned hierarchical enumeration.

3. A method according to claim 2, **characterized by** using three levels for the hierarchical enumeration.

4. A method according to claim 1, wherein a plurality of the parameters are motion vectors, **characterized by** using a combination of signed and unsigned hierarchical enumeration.

5. A method according to claim 4, **characterized by** using two levels for the hierarchical enumeration.

**Patentansprüche**

1. Kompressionsverfahren für Digitalbildinformationen zum Komprimieren von Bitdarstellungen von Parametern für Seiteninformationen in Form von Klassifikationstabellen oder Bewegungsvektoren, **gekennzeichnet durch** die Schritte:

   - Darstellen des zu kodierenden Parameters **durch** einen Vektor mit ganzzahligen Komponenten;
   - hierarchisches Aufzählen des Vektors in zwei oder mehr Stufen **durch** Aufteilen des Vektors in Untervektoren und/oder Vektorelementen auf jeder Stufe;

- Erzeugen von binären Kodewörtern für jeden Untervektor und/oder jedes Vektorelement auf einer gegebenen Stufe;
- wobei das binäre Kodewort für den Untervektor auf einer Stufe mittels der binären Kodewörter für die Untervektoren und/oder Vektorelemente auf einer niedrigeren Stufe gebildet ist,
- wobei das binäre Kodewort für ein Vektorelement auf einer Stufe mittels des binären Kodeworts für die Vektorelemente auf einer niedrigeren Stufe gebildet ist; und
- Erzeugen eines binären Kodeworts einer festen Länge für den Vektor aus den binären Kodewörtern für die Untervektoren oder die Vektorelemente der unmittelbar niedrigeren Stufe der Hierarchie.

2. Verfahren nach Anspruch 1, bei dem einer der Parameter als eine Klassifikationstabelle ausgebildet ist, **dadurch gekennzeichnet, dass** eine vorzeichenfreie hierarchische Aufzählung verwendet wird.

3. Verfahren nach Anspruch 2, **dadurch gekennzeichnet, dass** drei Stufen für die hierarchische Aufzählung verwendet werden.

4. Verfahren nach Anspruch 1, bei dem mehrere der Parameter als Bewegungsvektoren ausgebildet sind, **dadurch gekennzeichnet, dass** eine Kombination von vorzeichenfreier und vorzeichenbehafteter hierarchischer Aufzählung verwendet wird.

5. Verfahren nach Anspruch 4, **dadurch gekennzeichnet, dass** zwei Stufen für die hierarchische Aufzählung verwendet werden.

**Revendications**

1. Un procédé de compression d'informations d'images numérisées pour comprimer une représentation binaire de paramètres pour informations adjointes en forme de tables de classification ou de vecteurs de mouvement, **caractérisé par** :

   - la représentation du paramètre à coder par un vecteur avec des composantes entières,
   - l'énumération du vecteur hiérarchiquement en deux niveaux ou plus par partitionnement du vecteur en sous-vecteurs et/ou éléments de vecteur à chaque niveau,
   - la production de mots de code binaire pour chaque sous-vecteur et/ou chaque élément de vecteur à un niveau donné,
   - ledit mot de code binaire pour un sous-vecteur sur un niveau étant formé par les mots de code binaire pour les sous-vecteurs et/ou les éléments de vecteur à un niveau inférieur,
   - ledit mot de code binaire pour un élément de vecteur à un niveau étant formé par le mot de code binaire pour les éléments de vecteur à un niveau inférieur, et
   - la production d'un mot de code binaire de longueur fixe pour le vecteur à partir des mots de code binaire pour les sous-vecteurs ou les éléments de vecteur du niveau immédiatement inférieur de la hiérarchie.

2. Un procédé selon la revendication 1 dans lequel l'un des paramètres est une table de classification, **caractérisé par** l'utilisation d'une énumération hiérarchique non signée.

3. Un procédé selon la revendication 2, **caractérisé par** l'utilisation de trois niveaux pour l'énumération hiérarchique.

4. Un procédé selon la revendication 1 dans lequel une pluralité de paramètres sont des vecteurs de mouvement, **caractérisé par** l'utilisation d'une combinaison d'énumération hiérarchique signée et non signée.

5. Un procédé selon la revendication 4, **caractérisé par** l'utilisation de deux niveaux pour l'utilisation hiérarchique.

**Fig. 1**

**Fig.2**

**Fig.3**